# EUROPEAN PATENT APPLICATION

(11) **EP 0 782 338 A2**
(43) Date of publication of application: **02.07.1997**
(21) Application number: 96120924.4
(22) Date of filing: 27.12.1996
(51) Int. Cl.: H04N 7/173

(54) **Karaoke system**

(30) Priority: 27.12.1995 JP 341247/95; 16.05.1996 JP 121844/96; 16.05.1996 JP 121873/96; 16.05.1996 JP 121883/96; 16.05.1996 JP 121894/96; 16.05.1996 JP 121901/96; 16.05.1996 JP 121925/96; 21.06.1996 JP 162102/96; 21.06.1996 JP 162116/96
(71) Applicant: Amtex Corporation, Sawa-gun, Gunma-ken 379-22 (JP)
(72) Inventor: An, Toshinori, c/o Amtex Corporation, Sawa-gun, Gunma-ken 379-22 (JP); Futawatari, Masayuki, c/o Amtex Corporation, Sawa-gun, Gunma-ken 379-22 (JP); Nakazawa, Noboru, c/o Amtex Corporation, Sawa-gun, Gunma-ken 379-22 (JP); Sato, Hiroo, c/o Adtex Corporation, Takasaki-shi, Gunma-ken 370 (JP)
(74) Representative: Goddar, Heinz J., Dr.

(57) **Abstract**

To improve the quality of a "karaoke" system by displaying a video image of a singer on the monitor of the system, an cage picked up by a video camera is superimposed on a background image displayed on the monitor of the "karaoke" system, this superimposed image is enlarged or reduced, and a pattern of lyrics 20 can be seen through the superimposed image so that a singer can see it.

## Description

### Background of the Invention

### [Field of the Invention]

This invention relates to the control of an image which is picked up by an image pick-up device and is fitted into the screen of a monitor of a "karaoke" system.

### [Prior Art]

Heretofore, there has been available a "karaoke" system in which music is aired from a speaker and a user sings along with this music. Lyrics are displayed on the screen of a monitor together with a video picture, still picture or the like so that the user can sing along While looking at the lyrics.

In a communication type "karaoke" system, lyrics data are transmitted from a transmission station together with music data so that these data are received to air the music and display the lyrics on the monitor. An image which is extracted from an image storage section (LD) provided on a receiver side in advance is displayed on the monitor.

However, a singer merely sings along with music and a video picture or a still picture is merely displayed on the screen of the monitor. Therefore, the image displayed on the monitor rarely changes.

Especially in the case of the communication type "karaoke" system, even an image which does not match the music is displayed, thus providing a sense of discomfort. In addition, the image displayed on the monitor changes even less frequently.

### Summary of the Invention

This invention which has been made to solve the above problems is to fit an image of a singer picked up by an image pick-up device into a monitor and to control it based on various patterns.

The above and other objects, features and advantages of the invention will become more apparent from the following description when taken in conjunction with the accompanying drawings.

### Brief Description of the Drawings

Fig. 1 is a block diagram of a "karaoke" system according to Embodiment 1 of the present invention;
Fig. 2 is a diagram for explaining the function of the "karaoke" system of the present invention;
Fig. 3 is a diagram showing the key parts of the "karaoke" system of the present invention;
Fig. 4 is a diagram for explaining the function of the "karaoke" system of the present invention;
Fig. 5 is a diagram for explaining the function of the "karaoke" system of the present invention;
Fig. 6 is a diagram for explaining the function of the "karaoke" system of the present invention;
Fig. 7 is a diagram for explaining the function of the "karaoke" system of the present invention;
Fig. 8 is a diagram for explaining the function of the "karaoke" system of the present invention;
Fig. 9 is a diagram for explaining the function of the "karaoke" system of the present invention;
Fig. 10 is a diagram for explaining the function of the "karaoke" system of the present invention;
Fig. 11 is a diagram for explaining the function of the "karaoke" system of the present invention;
Fig. 12 is a diagram for explaining the function of the "karaoke" system of the present invention;
Fig. 13 is a diagram for explaining the function of the "karaoke" system of the present invention;
Fig. 14 is a block diagram of key parts of a "karaoke" system according to Embodiment 2 of the present invention;
Fig. 15 is a block diagram of a "karaoke" system according to Embodiment 3 of the present invention;
Fig. 16 is a block diagram of key parts of a "karaoke" system according to Embodiment 3 of the present invention;
Fig. 17 is a block diagram of key parts of a "karaoke" system according to Embodiment 4 of the present invention;
Fig. 18 is a diagram for explaining the operation of the present invention;
Fig. 19 is a block diagram of a "karaoke" system according to Embodiment 5 of the present invention;
Fig. 20 is a block diagram of a "karaoke" system according to Embodiment 5 of the present invention;
Fig. 21 is a block diagram of a "karaoke" system according to Embodiment 6 of the present invention;
Fig. 22 is a block diagram of a "karaoke" system according to Embodiment 6 of the present invention;
Fig. 23 is a block diagram of a "karaoke" system according to Embodiment 7 of the present invention;
Fig. 24 is a block diagram of a "karaoke" system according to Embodiment 7 of the present invention;
Fig. 25 is a block diagram of a "karaoke" system according to Embodiment 8 of the present invention;
Fig. 26 is a block diagram of a "karaoke" system according to Embodiment 8 of the present invention;
Fig. 27 is a block diagram of a "karaoke" system according to Embodiment 9 of the present invention;
Fig. 28 is a block diagram of a "karaoke" system according to Embodiment 9 of the present invention;
Fig. 29 is a block diagram of a "karaoke" system according to Embodiment 10 of the present invention; and
Fig. 30 is a block diagram of a "karaoke" system according to Embodiment 10 of the present invention.

### Description of the Preferred Embodiments

The preferred embodiments of the present invention are described hereinunder with reference to the accompanying drawings.

### Embodiment 1

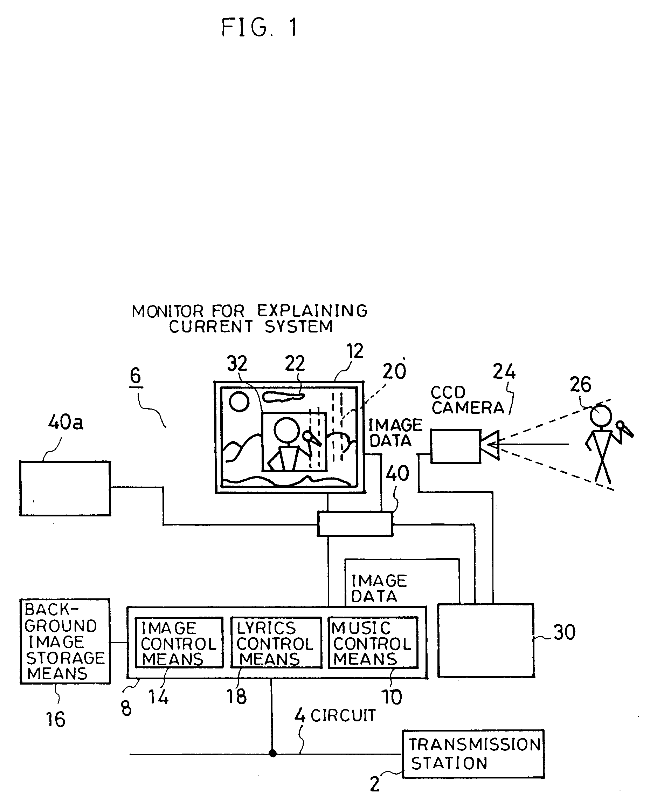

Fig. 1 is a block diagram of a "karaoke" system according to an embodiment of the present invention. In the figure, reference numeral 2 is a transmission station which transmits music data and lyrics data to a distribution station 6 over a circuit 4. Music is aired from a built-in speaker of a monitor 12 by music control means 10 of the main body 8 of the "karaoke" system on the side of the distribution station 6, a voice from an unshown microphone is aired from the above speaker, lyrics 20 are displayed by lyrics control means 18, and a background image 22 such as a video image or a still image extracted from background image storage means 16 is displayed on the monitor 12 by image control means 14. The lyrics 20 are superimposed upon the background image 22. Reference numeral 24 is an image pick-up device such as a CCD camera with which an image of a singer 26 is picked up and fitted into the screen of the monitor 12 through video image control means 30 as a superimposed image 32. In this case, the lyrics 20 are placed upon this superimposed image 32 or displayed at a position apart from the superimposed image 32 (position where the superimposed image 32 is not displayed).

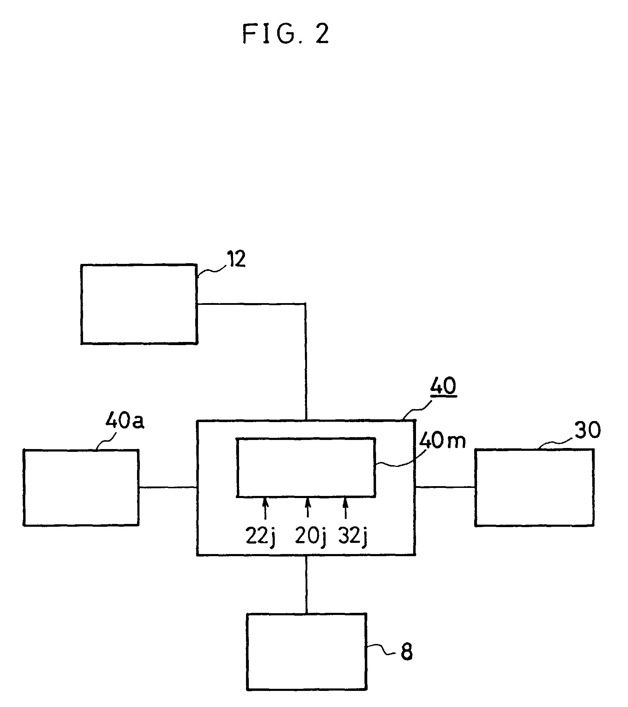

Reference numeral 40 is, as shown in Fig. 2, density control means for controlling the density of mixing of signals 22j, 20j, 32j by a mixer 40m for the background image 22 from the image control means 14, the lyrics 20 from the lyrics control means 18 and the superimposed image 32 from the video image control means 30. In this case, the density control means 40 controls such that the density of the superimposed image 32 is reduced based on the setting of the multiplication ratio of the mixer 40m by a density setting unit 40a so that the lyrics 20 can be seen through the superimposed image 32.

According to this, since the lyrics 20 can be seen through the superimposed image 32, the superimposed image 32 does not obstruct the singer 26's view of the lyrics 20. Further, the density of the superimposed image 32 can be set based on the adjustment of the density setting unit 40a such that it cannot interfere with viewers in viewing the lyrics 20 and recognizing the superimposed image 32.

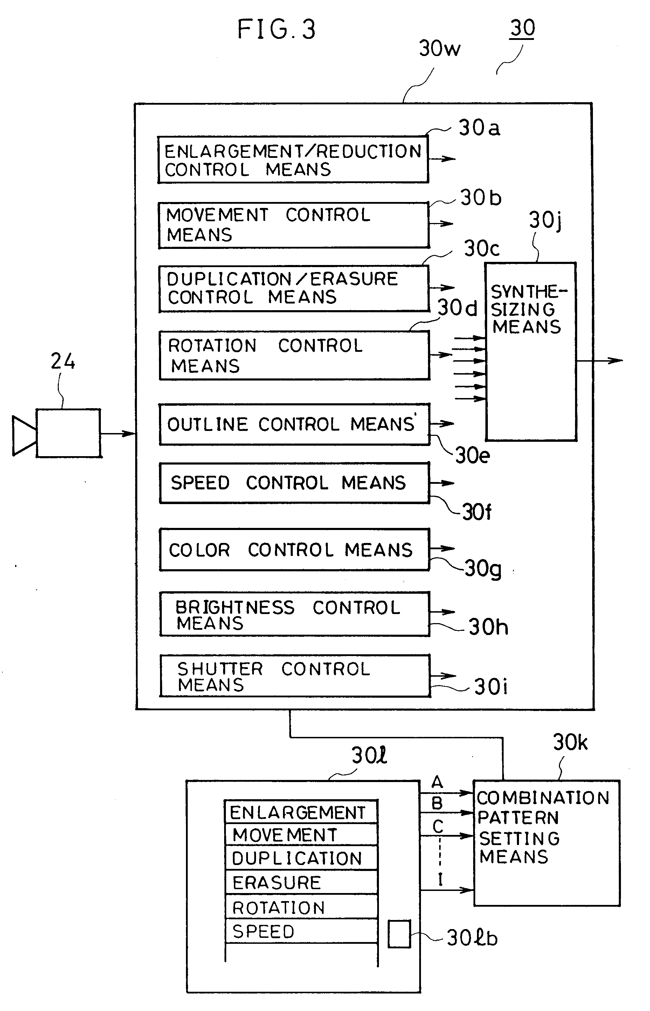

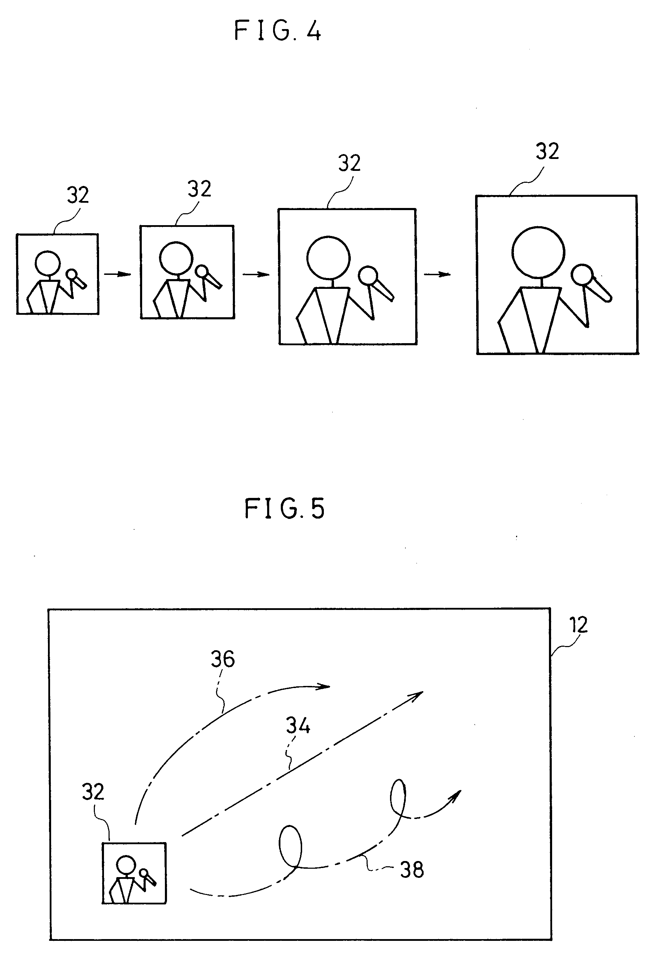

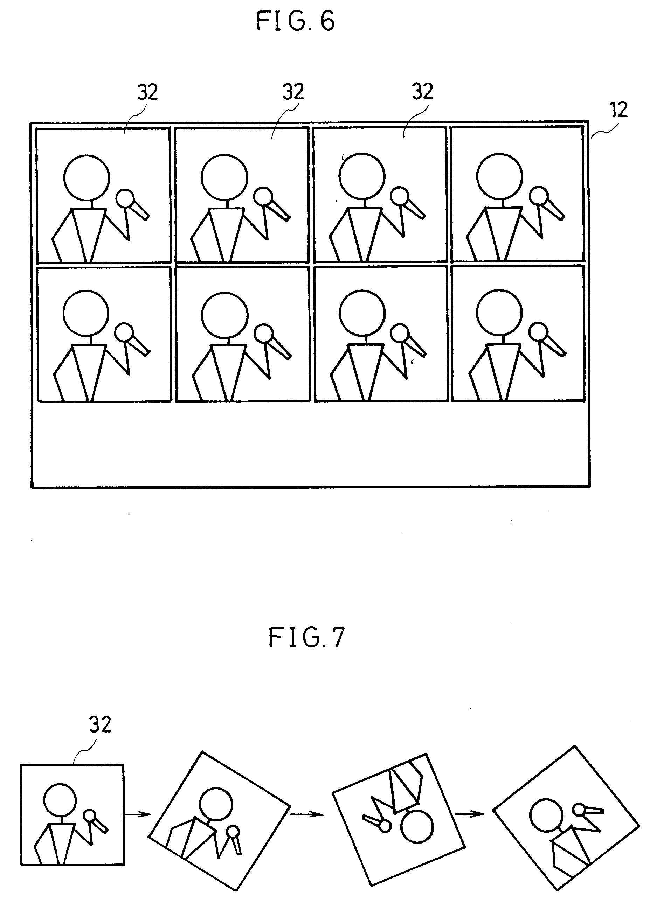

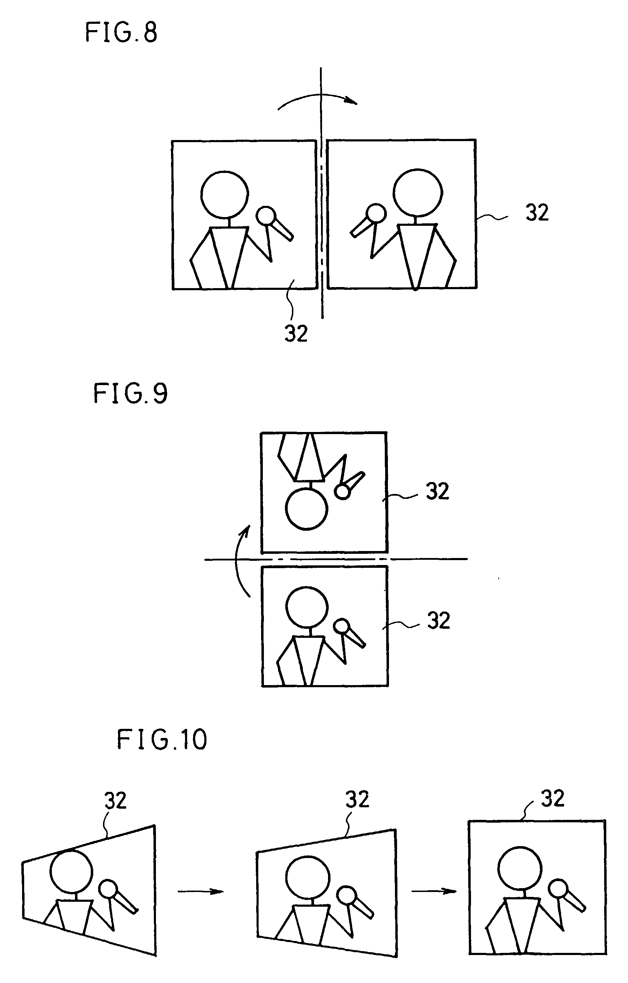

The above video image control means 30 has pattern combination means 30w which has a function to combine various patterns of the superimposed image 32. As shown in Fig. 3, the combination means 30w consists of enlargement/reduction control means 30a, movement control means 30b, duplication/erasure control means 30c, rotation control mean 30d, outline control means 30e, speed control means 30f, color control means 30g, brightness control means 30h, shutter control means 30i and synthesizing means 30j for synthesizing outputs from these means 30a to 30i. The video image control means 30 further comprises combination pattern setting means 30k and input means 30l. The above enlargement/reduction control means 30a, as shown in Fig. 4, enlarges the superimposed image 32 gradually as shown by an arrow or reduces the superimposed image 32 in an opposite direction while music is played. The movement control means 30b, as shown in Fig. 5, moves the superimposed image 32 along a set line such as a straight line 34 or a curve 36 or 38 having various curvatures while music is played. The duplication/erasure control means 30c, as shown in Fig. 6, displays several duplicates of the superimposed image 32 on the screen of the monitor 12, or erases the image at a predetermined position after displaying the image while music is played. The rotation control means 30d, as shown in Fig. 7, rotates the superimposed image 32 clockwise or counterclockwise on the plane of the screen of the monitor, or rotates (including reverses) it in a direction perpendicular to the screen, i.e., a horizontal direction or a vertical direction as shown in Figs. 8 and 9.

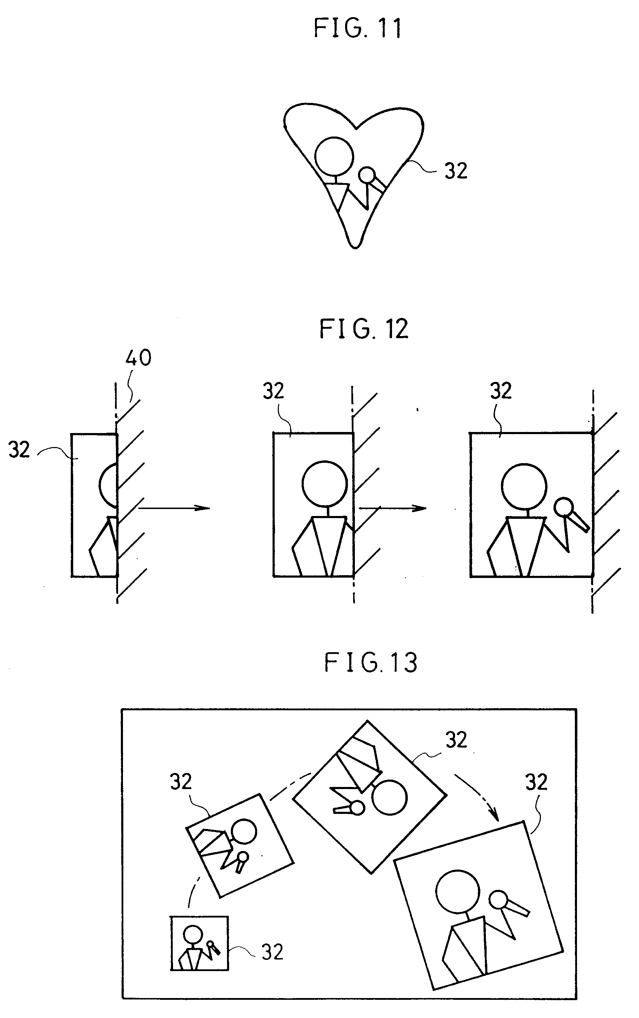

The outline control means 30e changes the outline of the superimposed image 32 to various shapes, for example, from a trapezoid to a rectangle, as shown in Fig. 10, or to a heart shape as shown in Fig. 11. The speed control means 30f controls the speed of enlargement or reduction of the superimposed image by the enlargement/reduction control means 30a, the speed of movement by the movement control means 30b, the speed of duplication or erasure by the duplication/erasure control means 30c, the speed of rotation by the rotation control means 30d, and the speed of changing the outline of the superimposed image by the outline control means 30e. The color control means 30g changes the color of the superimposed image 32. The brightness control means 30h changes the brightness of the superimposed image 32. The shutter control means 30i covers the superimposed image 32 with the shutter 40 of the background image as shown in Fig. 12 and gradually opens the shutter 40. The synthesizing means 30j selectively takes in data on the enlargement/reduction control means 30a to the shutter control means 30j based on an instruction from the combination pattern setting means 30k, selectively combines controls of enlargement/reduction, movement, duplication, rotation and outline change of the superimposed image 32 and carries out the controls simultaneously. The synthesizing means 30j synthesizes signals from the above means 30a to 30i and outputs a synthesized signal.

The above input means 30l is intended to input a combination of the above controls of the superimposed image 32 and has buttons 30la for assigning a control pattern for the superimposed image 32 to signals A to I and a signal setting button 30lb. When a control pattern for the superimposed image 32 is assigned to signals A, B, C, ...I from the input means 30l manually, the combination pattern setting means 30k takes in the signals A, B, C, ...I sequentially, selectively activates the control means 30a to 30i corresponding to the signals A, B, C, ... I sequentially, and instructs the synthesizing means 30j to combine data from the selected control means.

In other words, when "rotation" is assigned to signal A, "movement" to signal B and "speed" to signal C, for example, by operating the buttons 30la of the input means 30l and the signal setting button 30lb of the input means 30l is set, the signals A, B, C are input into an unshown storage means of the combination pattern setting means 30k and a pattern consisting of "rotation-movement-speed" is stored in storage areas for the signals A, B, C. The pattern combination means 30w selects and activates the rotation control means 30d, the movement control means 30b and the speed control means 30f based on this stored pattern. The synthesizing means 30j rotates the superimposed image 32 based on a rotation instruction from the rotation control means 30d and moves it based on a movement instruction from the movement control means 30b at a predetermined speed (a speed assigned to signal C by the input means 30l) based on a speed instruction from the speed control means 30f.

Thus, when enlargement or reduction, movement, duplication or erasure, rotation, outline, speed, color, brightness and shutter control modes are assigned to the signals A to I by the input means 30l and the assigned signals A to I are supplied to the combination pattern setting means 30k, the combination pattern setting means 30k takes in the signals A to I sequentially, stores a control pattern of the assigned signals A to I, and controls the pattern combination means 30w based on the control pattern. Thereby, the superimposed image 32 is controlled in accordance with the control pattern input by the input means 30l.

The above input means 30l has a setting button 30lb for setting a control pattern obtained by assigning various control modes to the signals A, B, C... When this setting button 30lb is turned on, signals A, B, C ... which have been assigned before the button 30lb is turned on are supplied to the combination pattern setting means 30k. For example, when this setting button 30lb is turned on after a control pattern is assigned to signals A to E, the signals A to E are supplied to the combination pattern setting means 30k which in turn controls the pattern combination means 30w to control the superimposed image 32 based on the control pattern assigned to the signals A to E.

When the synthesizing means 30j receives an instruction from the combination pattern setting means 30k to move along a curve, enlarge and rotate the superimposed image 32, it takes in data from the enlargement/reduction control means 30a, the movement control means 30b and the rotation control means 30d to synthesize the data and instructs the monitor 12 to control the superimposed image 32. Thus, the superimposed image 32 is controlled as shown in Fig. 13. In this case, the enlargement/reduction control means 30a enlarges and not reduces the superimposed image 32, the movement control means 30b moves the superimposed image 32 along a predetermined curve and not a straight line, and the rotation control means 30d rotates the superimposed image 32 clockwise on the plane. These settings are automatically made based on a signal from the combination pattern setting means 30k.

According to the above embodiment, when signals A, B, C, ... indicative of a desired combination by setting the input means 30l manually are output sequentially and set in the combination pattern setting means. 30k, the superimposed image 32 can be changed in various ways in accordance with the combination in process of being superimposed upon the background image 22 while music is played.

### Embodiment 2

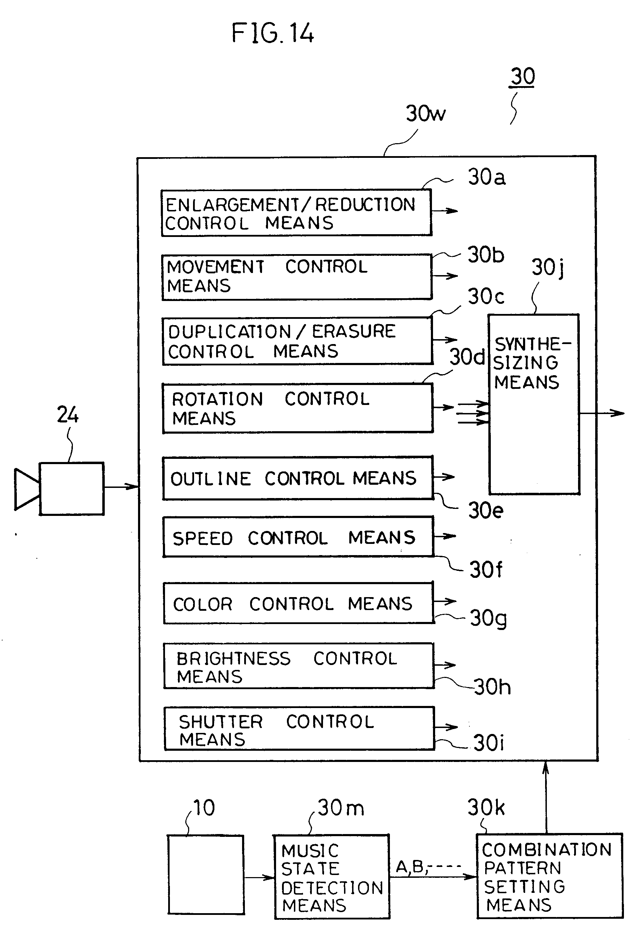

As shown in Fig. 14, there is provided music state detection means 30m for controlling the combination pattern setting means 30k based on music data from the music control means 10 by extracting a music tempo. The enlargement or reduction, movement, duplication, rotation and outline change controls of the superimposed image can be combined by the music state detection means 30m in accordance with a melody played by the "karaoke" system.

According to this embodiment, the signals A, B, C... are automatically assigned according to the tempo of the music played. For instance, the speed control means 30f is automatically set in accordance with the tempo to change the speed of enlargement or reduction, the speed of movement, the speed of duplication or erasure, the speed of rotation, the shutter speed of the superimposed image 32 and also change the color and brightness of the superimposed image 32.

### Embodiment 3

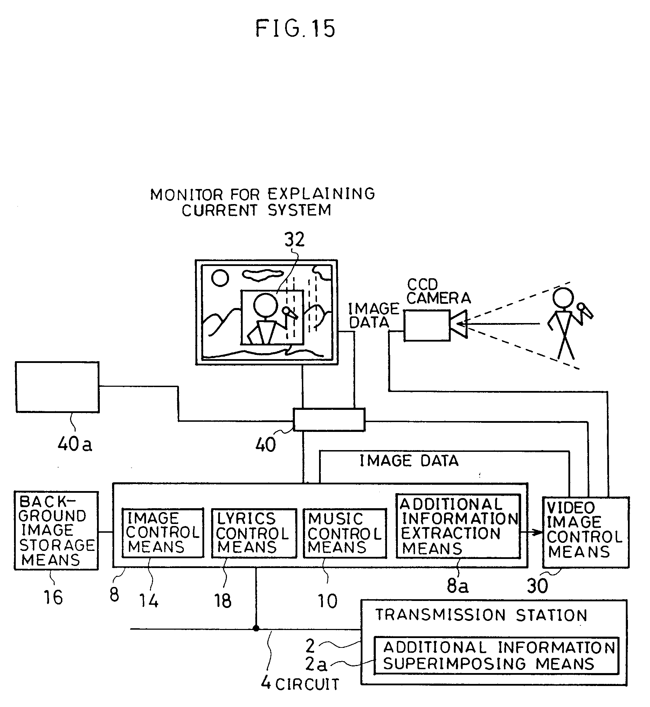

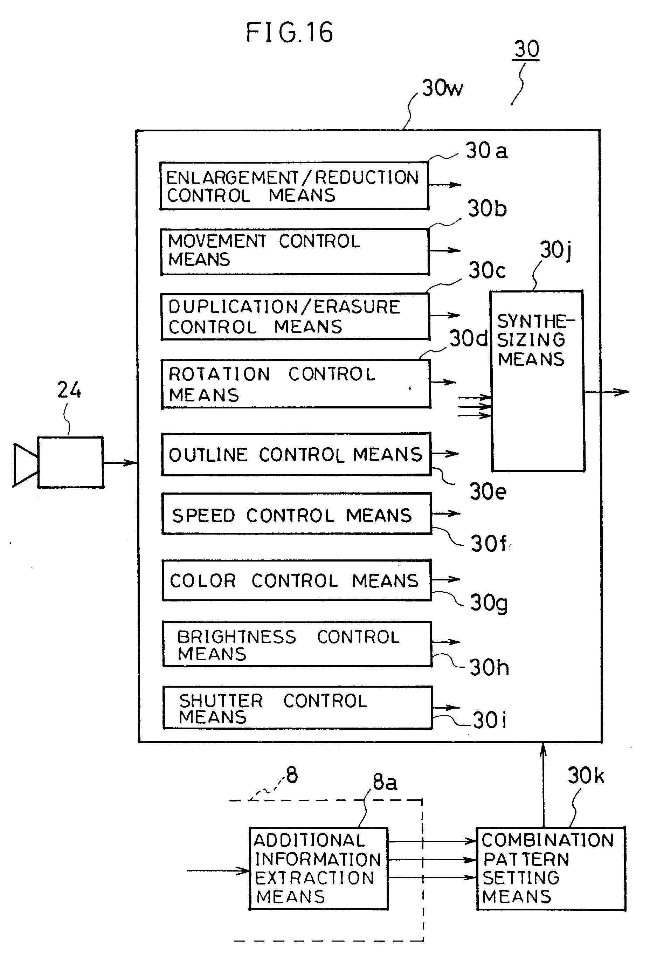

In this embodiment, as shown in Figs. 15 and 16, additional information superimposing means 2a for superimposing a pattern signal for controlling video image control means 30 upon output data is provided in the transmission station 2 and additional information extraction means 8a is provided in the main body 8 of the "karaoke" system. When the above pattern signal is transmitted by the additional information superimposing means 2a of the transmission station 2, the enlargement or reduction, movement, duplication, rotation and outline change controls of the superimposed image 32 can be carried out based on additional information transmitted from the external transmission station 2 together with music data. Therefore, since the superimposed image 32 is controlled in accordance with a melody automatically, it is not necessary to set a combination of the controls of the superimposed image 32 manually. In the present invention, an additional video camera (pick-up device) is prepared to pick up an image of another location such as guest seats and display it as a background image or the superimposed image 32. A plurality of superimposed images 32 picked up by a plurality of video cameras may be displayed.

In other words, according to the above embodiment, the superimposed image 32 can be controlled in the following ways.
1) A close-up image is enlarged gradually from the center of the screen to the full size of the screen.
2) An image is reduced to the center while being rotated vertically.
3) A medium-sized trapezoidal image appears from the left side of the screen, becomes square and stops for a while at the center, and disappears into the right side in the form of a reversed trapezoid.
4) An image appears from the bottom of the screen as large as the width of the screen, is slightly reduced and rotates counterclockwise twice.
5) The screen is divided into four rectangular sections.
6) The screen is divided into nine rectangular sections.
7) An image appears from the lower right side of the screen and is fully displayed on the entire screen.
8) The screen is divided into 16 rectangular sections.
9) An image is displayed on the entire screen, falls down in a rear direction with the bottom line thereof as an axis, becomes a small trapezoid, moves towards the center and disappears as if it were absorbed into the center.
10) An image appears from the left side of the screen in the form of a medium-sized trapezoid, stops for a while at the center, and moves to the right side in the opposite manner.
11) A large trapezoidal image appears from the left side of the screen, stops for a while when half of the image appears, and the left side of the image becomes as large as the length of the screen.
12) The screen is divided into nine rectangular sections and a close-up image is displayed on the center rectangular section of the screen.
13) The screen is divided into right and left sections and an image rotates counterclockwise around the center line of the screen.
14) The screen is divided into right and left sections to display two images, a left image moves from the left side of the screen toward the center and is absorbed into the center, and a right image moves from the right side and disappears into the center.
15) A (large) trapezoidal image appears from the left side of the screen and disappears into the left side.
16) Multiple images appears only on the left section of the screen and a front image appears on the right section of the screen and is absorbed into the left side of the section.
17) The screen is divided into four rectangular sections, and an image slides to the upper left section, to the lower left section and to the lower right section.
18) An image appears fully on the entire screen, moves down and disappears, appears again from above, disappears into the right side, and appears again from the left side.
19) An image appears from an upper left direction of the screen while being enlarged gradually, moves toward the center, stops for a while (intermediate size), rotates twice counterclockwise at the center, and disappears into a lower right direction while being reduced.
20) An image appears from an upper left direction, is enlarged to the full size of the screen while rotating clockwise, is reduced while rotating clockwise toward the center, and is enlarged to the full size of the screen while rotating clockwise.
21) A trapezoidal image appears from the right side of the screen while moving sideways in a straight line, is turned upside down using a slanted line at the center of the trapezoid as an axis, and a trapezoid having the same size appears on the right half of the screen.
22) An image slides from a lower left direction gradually and is fully displayed on the entire screen, the screen is then divided into four rectangular sections, and an image displayed on the lower right section is enlarged to the full size of the screen.
23) An image moves from an upper left direction to a lower right direction while rotating on the plane, moves toward an upper right direction in a straight line, then from an upper right direction toward a lower left direction while rotating on the plane, and then move toward an upper left direction in a straight line.
24) An image appears from an upper left direction while being enlarged to the full size of the screen gradually, and disappears toward an upper right direction while being reduced gradually.
25) A window as large as the width of the screen appears from the right side of the screen, stops for a while when it is fully displayed on the entire screen, is inclined toward a left direction at 30°, and disappears toward an upper right direction while being reduced.
26) An image appears on the upper left rectangular section of the screen, and images appear on the lower left, lower right and upper right rectangular sections sequentially to display four images on the screen.
27) An image appears on the entire screen, falls down in a rear direction with the bottom line as an axis until it becomes a trapezoid and is absorbed into the center.
28) An image appears on the entire screen, is reduced while rotating clockwise toward the center and then is enlarged to the full size of the screen while rotating clockwise when it is at its smallest.
29) A trapezoidal image appears from the left side of the screen, becomes rectangular at the center, stops for a while, becomes trapezoidal while moving to the right side and disappears.
30) An image slides from a lower right direction toward a left direction and is enlarged to the full size of the screen.
31) An image appears on the left half section of the screen, an image appears on the right half section of the screen, and both images slide toward a left direction in a straight line.
32) A trapezoidal image appears from the right side of the screen, stops when its left side is positioned at the center and is turned over around the center axis, and an image appears on the right half section of the screen and slides to the left side in a straight line.
33) An image appears from a upper left direction and is enlarged to the full size of the screen.
34) An image is fully displayed on the entire screen, inclined at 30° in a left direction, moves to the right side while being reduced and disappears.
35) The screen is split into four rectangular sections, an image slides to the upper left section, down to the lower left section, to the lower right section and to the upper right section.
36) An image as large as the height of the screen appears from the right side, slides towards a left direction and is fully displayed on the entire screen.
37) A small window appears from an upper left direction, moves to the center while being enlarged, becomes a medium-sized window and stops for a while at the center, rotates counterclockwise twice at the center, moves toward a lower right direction while being reduced and disappears.
38) A trapezoidal image appears on the left half section of the screen and disappears into the left side.
39) A small window appears in an upper left direction, moves toward a lower right direction while rotating on the plane, moves from a lower right direction toward an upper right direction in a straight line, moves from an upper right direction toward a lower left direction while rotating and then toward an upper left direction in a straight line.
40) The screen is gradually divided into 9 rectangular sections.
41) A trapezoidal image appears form the left side, moves to the center, stops for a while at the center, is turned over around the center axis, moves to the right side and disappears in the form of a trapezoid.
42) An image appears on the entire screen, is erased from the top to the bottom along the horizontal axis and is reproduced from the top to the bottom along the horizontal axis.
43) An image is erased from left to right along the horizontal axis and reproduced from left to right.
44) An image appears on the entire screen, moves toward a right direction while being reduced and disappears.
45) An image appears from an upper left direction and is enlarged to the full size of the screen while rotating clockwise on the plane.
46) An image appears gradually from a lower left direction and is enlarged to the full size of the screen.
47) An image appears from a lower direction while sliding in a straight line.
48) The screen is gradually divided into 16 rectangular sections.
49) An image is reduced while rotating in a rear direction with a center horizontal axis line as an axis, becomes small, is enlarged gradually without rotating and is fully displayed on the entire screen.
50) The screen is divided into right and left sections, a left image moves from the left side toward the vertical center line, is absorbed into the center line and disappears, and a right image moves from the right side to the center line, is absorbed into the center line and disappears.
51) An image appears on the entire screen, the screen is divided into four rectangular sections while the image is reduced to an upper left quarter of the screen, and an image displayed on the lower right rectangular section of the screen is enlarged to the full size of the screen.
52) A trapezoidal image appears from the left side, stops at the center line, and is enlarged to the full size of the screen while expanding toward the right side.
53) Slightly small right and left images are displayed and rotated horizontally around a vertical center line.
54) A slightly small image is displayed and rotated horizontally around a vertical center line.
55) The screen is divided into 9 rectangular sections, and an image displayed on the center section is enlarged to the full size of the screen.
56) An image appears from a lower left direction of the screen, slides gradually and is fully displayed on the entire screen.
57) An image appears from the right side, slides in a straight line and is fully displayed on the entire screen.
58) The screen is divided into 4 rectangular sections gradually and images displayed on these sections shift in a direction from upper right to lower right, lower left and upper left.
59) An image appears on the entire screen, falls down in a rear direction with its bottom line as an axis, becomes trapezoidal and is absorbed into the center.
60) A small window appears at the center of the screen and is enlarged gradually to the full size of the screen.
61) A medium-sized window appears and rotates horizontally around a vertical center axis.

As described above, according to Embodiments 1, 2 and 3 of the present invention, since a lyrics pattern can be seen through the superimposed image, it is possible for a singer to read the lyrics pattern precisely.

### Embodiment 4

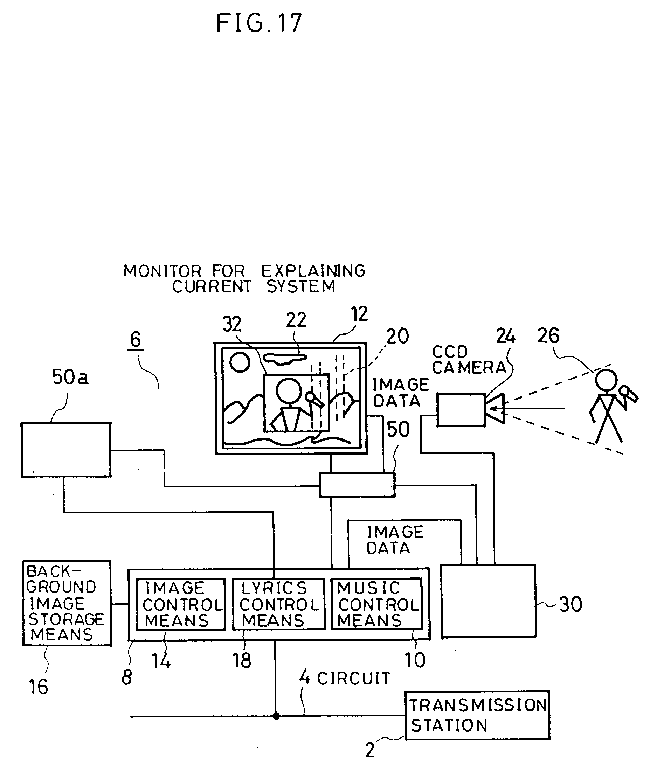

Fig. 17 is a block diagram of a "karaoke" system according to another embodiment of the present invention. In the figure, reference numeral 2 is a transmission station which transmits lyrics data together with music data to a distribution station 6 over a circuit 4. The music control means 10 of the main body 8 of the "karaoke" system on the side of the distribution station 6 airs music through a built-in speaker of a monitor 12 and voice from an unshown microphone through the above speaker. Lyrics control means 18 displays lyrics 20 and image control means 14 displays a background image 22 such as a video image or still image extracted from background image storage means 16 on the monitor 12. The lyrics 20 are superimposed upon the background image 22. Reference numeral 24 is an image pickup device such as a CCD camera with which an image of a singer 26 is picked up. This image is superimposed on the screen of the monitor 12 through video image control means 30 as a superimposed image 32. In this case, the lyrics 20 are displayed upon this superimposed image 32 or at a position apart from the superimposed image 32 (a position where the superimposed image 32 is not displayed).

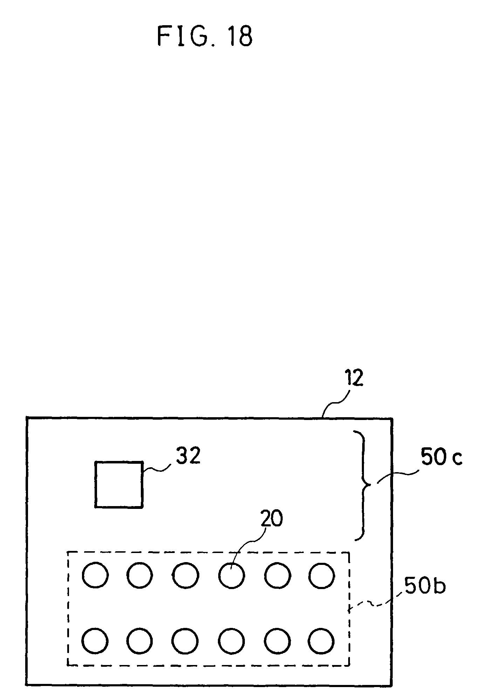

Reference numeral 50 is display area setting means for setting the display area of the superimposed image 32. Reference symbol 50a is lyrics position detection means for detecting the display area of the lyrics 20. As shown in Fig. 18, this means 50a detects a frame 50b including a portion where the lyrics 20 are displayed by the lyrics control means 18 to make it a display inhibited area so that the display area setting means 50 displays the superimposed image 32 on an area 50c other than this frame 50b.

According to the above embodiment, since the superimposed image 32 does not conceal the lyrics 20, a singer can read the lyrics 20 well.

In other lyrics, according to the above embodiment of the present invention, since the superimposed image 32 is displayed at a position where the lyrics 20 are not displayed, it does not obstruct the singer's view of the lyrics.

### Embodiment 5

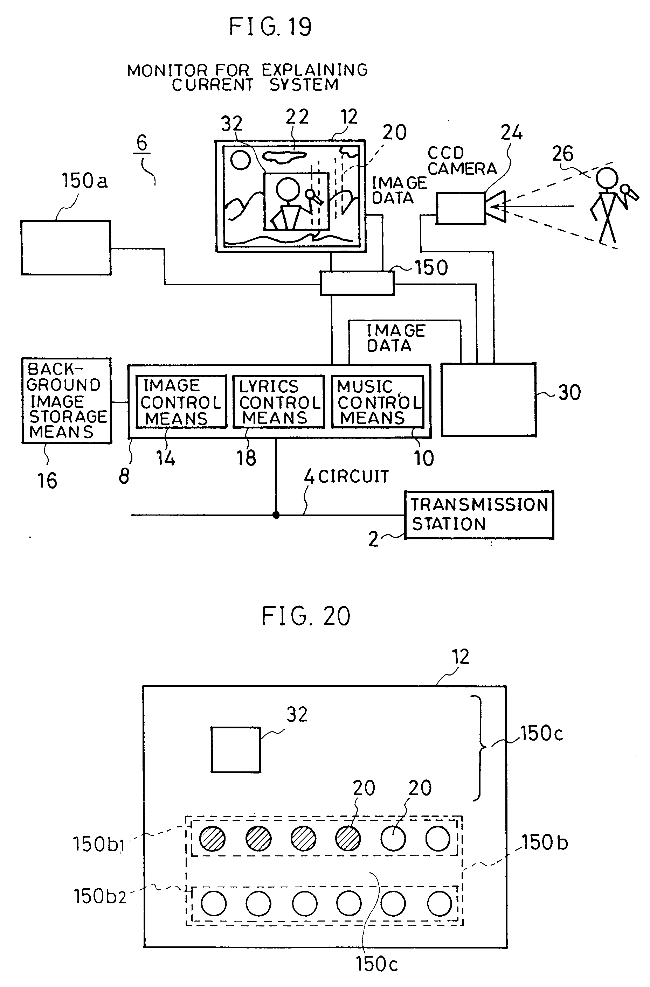

Fig. 19 is a block diagram of a "karaoke" system according to another embodiment of the present invention. In the figure, reference numeral 2 is a transmission station which transmits lyrics data together with music data to a distribution station 6 over a circuit 4. The music control means 10 of the main body 8 of the "karaoke" system on the side of the distribution station 6 airs music through a built-in speaker of a monitor 12 and voice from an unshown microphone through the above speaker. Lyrics control means 18 displays lyrics 20 and image control means 14 displays a background image 22 such as a video image or still image extracted from background image storage means 16 on the monitor 12. The lyrics 20 are superimposed upon the background image 22. Reference numeral 24 is an image pick-up device such as a CCD camera with which an image of a singer 26 is picked up. This image is superimposed on the screen of the monitor 12 through video image control means 30 as a superimposed image 32. In this case, the lyrics 20 are displayed upon this superimposed image 32 or at a position apart from the superimposed image 32 (a position where the superimposed image 32 is not displayed).

Reference numeral 150 is display area setting means for setting the display area of the superimposed image 32. Reference symbol 150a is lyrics position detection means for detecting the display area of lyrics. In an ordinary "karaoke" system, as shown in Fig. 20, paying attention to the fact that the lyrics 20 change their colors to coincide with the music played, the lyrics position detection means 150a detects a color changing portion and outputs a frame 150b (corresponding to the position of the lyrics) having a preset size and including the color changing portion as a display inhibited area so that the display area setting means 150 displays the superimposed image 32 in an area 150c other than this frame 150b.

According to the above embodiment, since the superimposed image 32 does not conceal the lyrics 20 from view, the singer can read the lyrics 20 well.

In other lyrics, according to the above Embodiment 5 of the present invention, since a portion where a pattern of the lyrics 20 changes its color is considered as the display position of the lyrics 20 and the superimposed image 32 is displayed at a position other than the above portion, the superimposed image does not obstruct the singer's view of the lyrics.

In the present invention, in a portion where the lyrics are displayed in upper and lower lines, the superimposed image 32 may be displayed between the upper, line and lower line of the lyrics. In this case, as shown in Fig. 20, small frames 150b1 and 150b2 are set in place of the large frame 150b and made display inhibited areas. Therefore, since a portion 150c between the small frames 150b1 and 150b2 is not a display inhibited area, the superimposed image 32 can be displayed in the portion.

### Embodiment 6

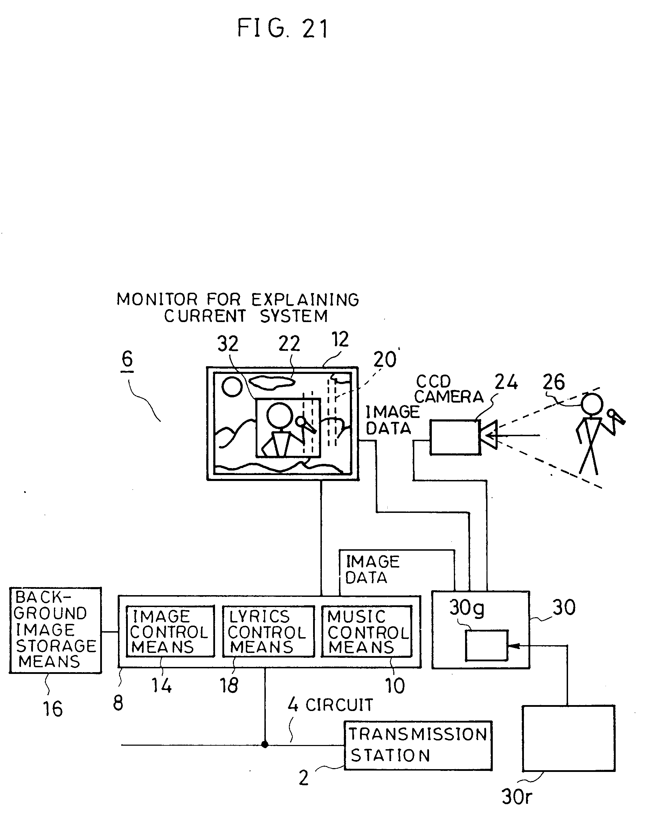

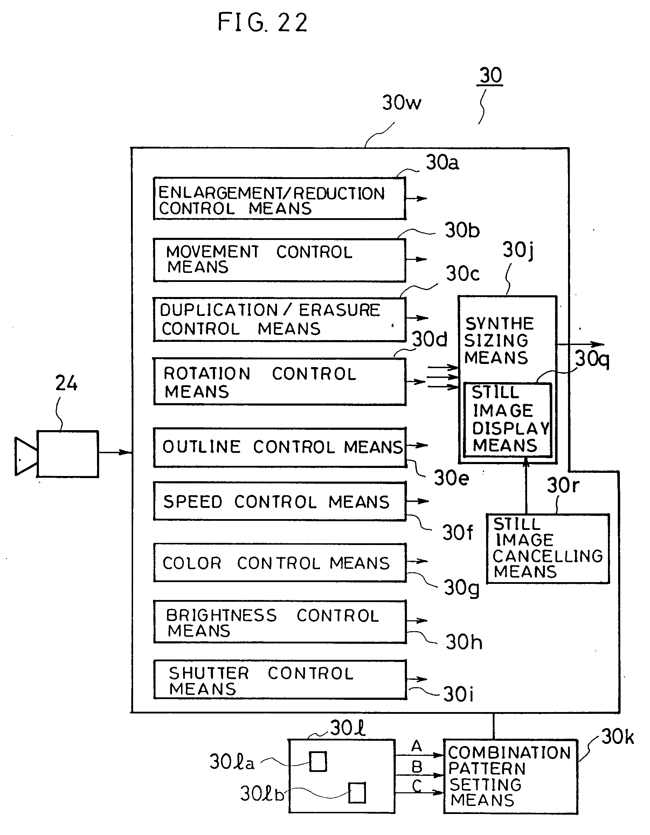

Figs. 21 and 22 are block diagram of a "karaoke" system according to still another embodiment of the present invention. In the figures, reference symbol 30q is still image display means for locking the image synthesis operation of the synthesizing means 30j for a predetermined time from the start of music to prevent the rotation, enlargement and the like of the superimposed image to display a still image as the superimposed image 32. The above locking is unlocked by a cancel signal from still image cancelling means 30r. The still image cancelling means 30r is formed of a timer which becomes operative after the passage of a predetermined time T from the start of music and supplies the cancel signal to the still image display means 30q after the passage of the time T.

According to the above embodiment, since a still image is displayed for the predetermined time T from the start of music as the superimposed image 32, the singer or the like can see from this still image who is displayed on the screen and how. Since the image displayed is changed, e.g., rotated and enlarged, after this view, a sense of discomfort produced when the superimposed image 32 begins to be rotated immediately after the start of music can be, avoided.

The still image cancelling means 30r is not limited to a device which incorporates a timer and may be a device which outputs the above cancel signal by detecting a sound from a microphone, paying attention to the fact that the sound is input from the microphone after the passage of a predetermined time from the start of music.

In other words, according to the above Embodiment 6 of the present invention, since the superimposed image 32 is changed, e.g., rotated and enlarged or reduced, after the passage of a predetermined time T from the start of music, a singer and the like can see the state of the superimposed image 32 during this time.

### Embodiment 7

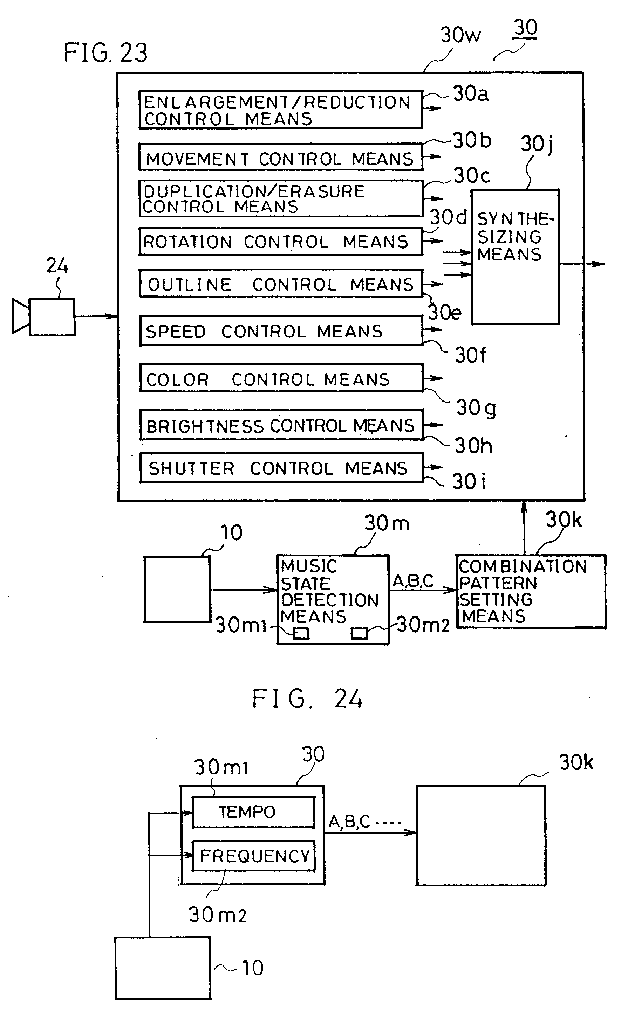

Fig. 23 is a block diagram of a "karaoke" system according to still another embodiment of the present invention. As shown in Figs. 23 and 24, the tempo of music data including a voice from music control means 10 is extracted by tempo extraction means 30m1, the frequency of the above music data is detected by frequency detection means 30m2 incorporating a band-pass filter, and the tempo extraction means 30m1 and the frequency detection means 30m2 constitute music state detection means 30m for controlling the combination pattern setting means 30k.

According to the above embodiment, when output signals A, B, C,... are automatically set according to whether the tempo of music played is fast or slow and whether the music is lively at a high frequency and the speed control means 30f, for example, is automatically set, the enlargement or reduction speed, movement speed, duplication or erasure speed, rotation speed, shutter speed and the like of the superimposed image 32 as well as color and brightness change speeds can be changed, a combination pattern of changes, that is, a combination of enlargement/reduction-movement-duplication-rotation, for example, can be changed. When the tempo is slow, the above speeds are reduced, when the music is relatively lively at a high detection frequency, rotating images and images changing from reduction to enlargement are combined, and when the music is gentle in mood (low detection frequency), images changing from enlargement to reduction and unrotated images are combined.

That is, according to the above embodiment 7 of the present invention, since the state of the superimposed image 32 is changed according to the frequency of the music, images matching the mood of the music can be obtained.

In the embodiment 7 of the present invention, the change speeds of each image may be controlled according to frequency.

### Embodiment 8

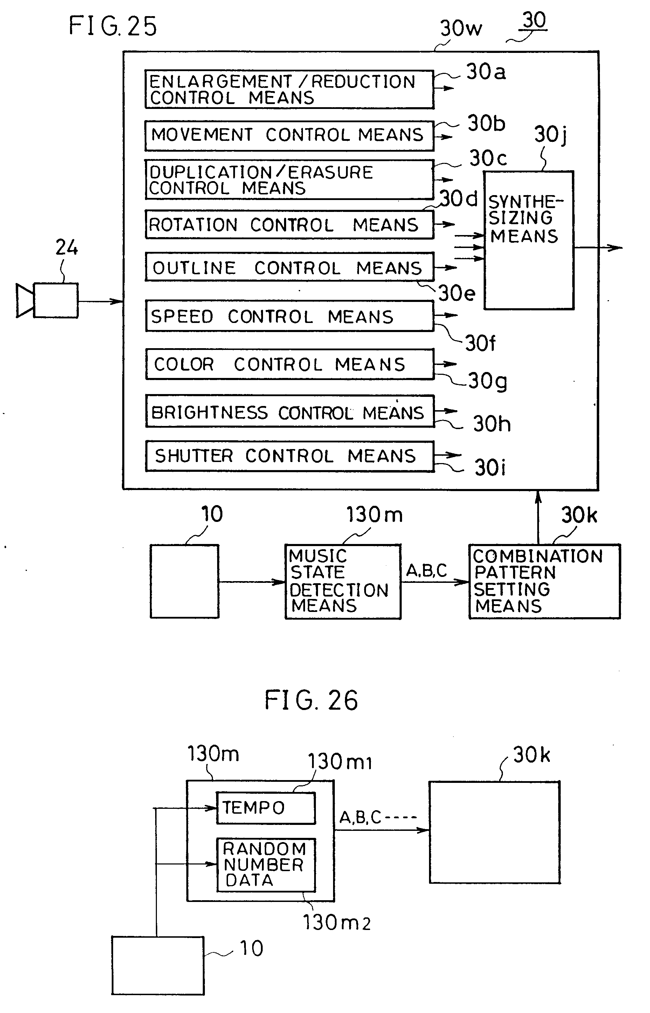

In this embodiment, as shown in Figs. 25 and 26, the music tempo of music data including a voice from music control means 10 is extracted by tempo extraction means 130m1, random number data is output from random number data output means 130m2, and the tempo extraction means 130m1 and the random number data output means 130m2 constitute music state detection means 130m for controlling the combination pattern setting means 30k. The enlargement or reduction, movement, duplication, rotation and outline change of the superimposed image 32 are controlled by the music state detection means 130m. That is, when enlargement or reduction is assigned to numeral 1, movement to 2, duplication to 3, erasure to 4 and rotation to 5 and random data consisting of 5, 1, 2, 4, 3, 2, 2, 4, 1, 5... are output sequentially, the superimposed image 32 is changed based on the random data.

According to the above embodiment, output signals A, B, C ... are automatically set according to whether the tempo of the music played is fast or slow, the enlargement or reduction speed, movement speed, duplication or erasure speed, rotation speed, shutter speed and the like of the superimposed image 32 are changed and the color and brightness change speeds can be changed by controlling the speed control means 30f, and the changes of the superimposed image 32 are set at random based on random number data, for example, the image is enlarged, moved and duplicated. Therefore, the change pattern of the image is not fixed and is varied. That is, since a combination pattern of enlargement or reduction-movement-duplication-erasure-rotation is changed irregularly based on the random number data, a singer and the like are not bored and do not feel tired.

In other words, according to the Embodiment 8 of the present invention, the superimposed image 32 is changed based on random number data and is not changed in accordance with a fixed pattern, a singer and the like are not bored and do not feel tired.

In the above Embodiment 8 of the present invention, the change speed of each image may be included in random number data.

### Embodiment 9

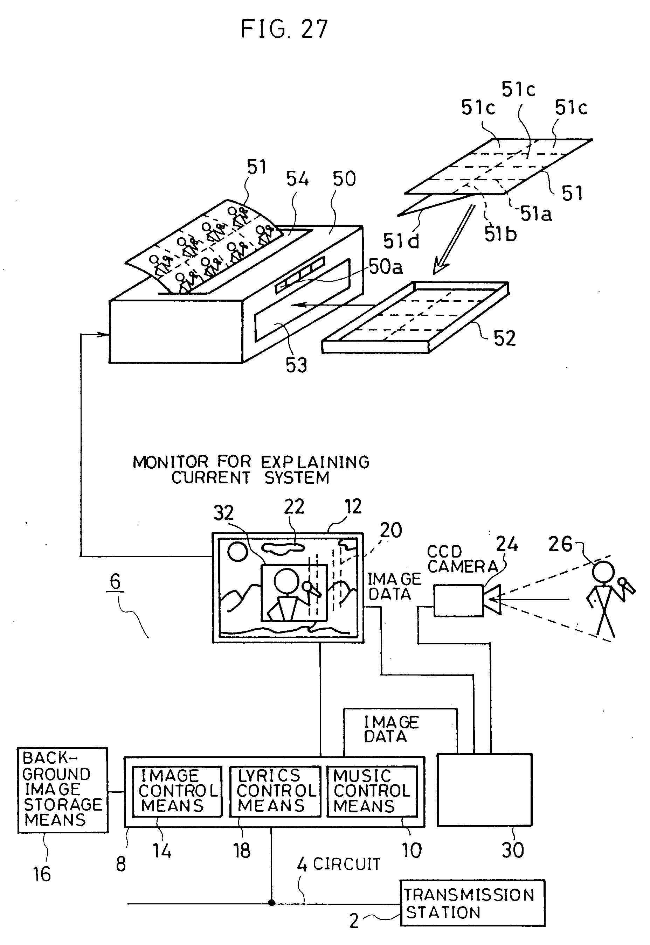

Fig. 27 is a block diagram of a "karaoke" system according to still another embodiment of the present invention. In the figure, reference numeral 50 is a printer which has an input port 53 of a casette 52 for storing a plurality of mounts 51 and an output port 54 for discharging the printed mounts 51. The mount 51 has a plurality of areas 51c, 51c, ... defined by vertical and horizontal perforations 51a, 51b and release paper 51d pasted to the rear side thereof.

This printer 50 prints in color the superimposed image 32 displayed on the monitor on the above areas 51c, 51c, ... of the mount 51 and discharges the mount 51 from the output port 54. Reference symbol 50a is an image recording switch.

According to the above constitution, when a suitable superimposed image 32 is displayed on the monitor 12 and the image recording switch 50a is depressed, this superimposed image 32 is printed on the areas 51c, 51c, ... of the mount 51 which is then discharged from the output port 54.

When the mount 51 is divided into pieces corresponding to the respective areas by tearing along the perforations 51a, 51b and the release paper 51d is removed from the mount 51, pieces having the superimposed image 32 printed thereon can be pasted anywhere.

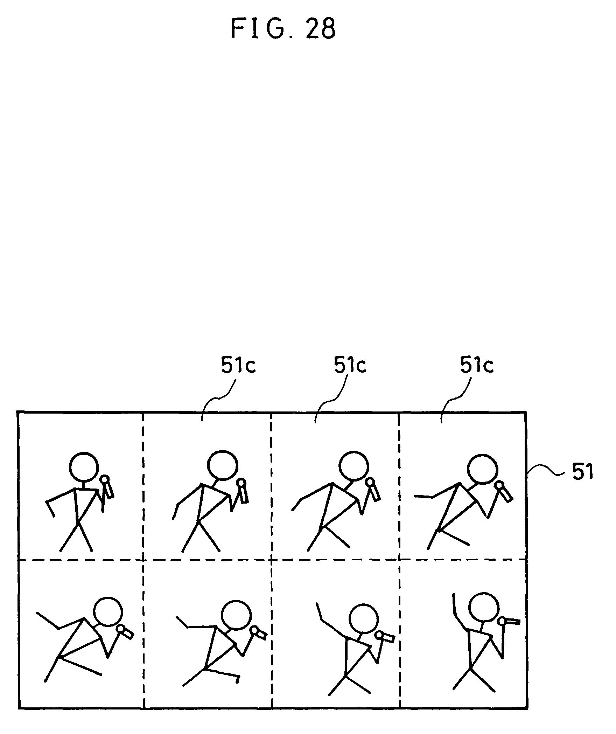

According to the above embodiment of the present invention, the same superimposed image 32 is printed on the plurality of areas 51c, 51c, ... However, as shown in Fig. 28, strobo images obtained by sampling the movement of the superimposed image 32 at intervals of several seconds may be printed on the mount 51.

Alternatively, the previous superimposed image 32 (transmittance of 50 %) and the subsequent superimposed image 32 may be overlapped with each other and the overlapped image may be displayed on the monitor 12 and printed on the areas 51c, 51c,...

The divisions of the mount 50 by the perforations 51a, 51b is not limited to 8 and may be 6, 9, 12, 15, 20 or the like.

An image to be printed on the mount 50 may be a combination of the superimposed image 32 and the background image 22.

An image to be printed in color on the mount 50 may be a combination of the superimposed image 32 and an image of another person prestored.

An image may be printed on the mount 50 by thermal transfer system, dot printing system or the like.

According to the Embodiment 9 of the present invention, since an image including the superimposed image 32 is printed out by a printer, an image of a singer singing can be printed out and seen as a record.

### Embodiment 10

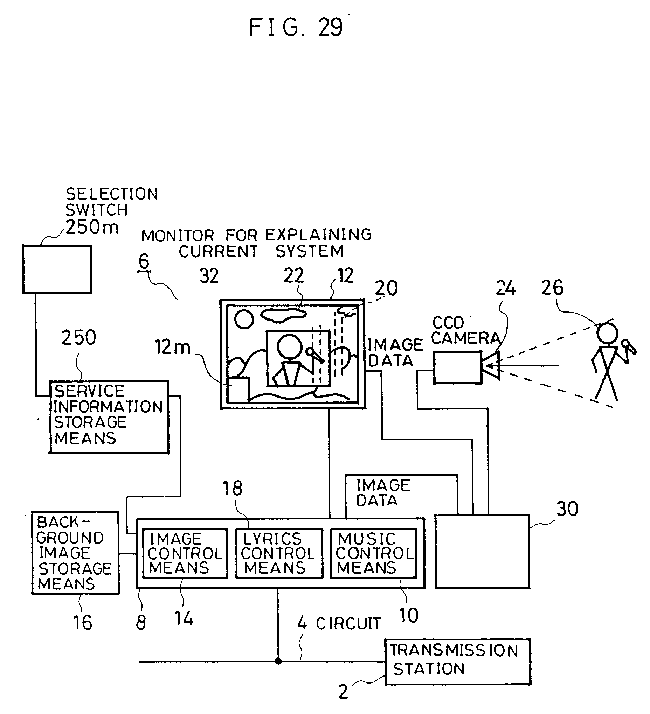

Fig. 29 is a block diagram of a "karaoke" system according to a still further embodiment of the present invention. In the figure, reference numeral 250 is service information storage means for storing various service information such as advertising media, time, weather forecast and the like. Type of service information such as advertising media, time, weather forecast and the like is selected by the operation of a selection switch 250m.

The selected service information is processed by the main body 8 of the "karaoke" system and displayed within a service information display window 12m provided in the corner, for example, of the screen of the monitor 12.

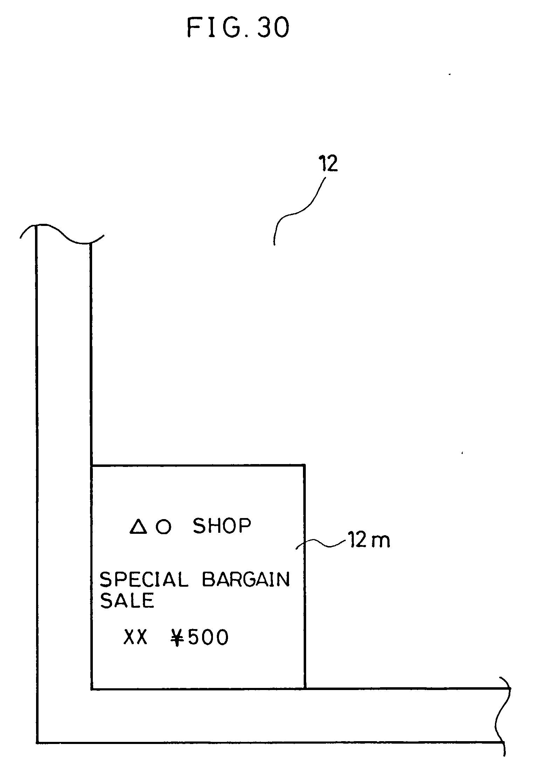

Fig. 30 shows an example of an advertisement displayed in the above service information display window 12m.

According to the constitution of the above Embodiment 10, various service information such as advertisements are stored in the service information storage means 250 and selected by the selection switch 250m, and the selected service information is displayed in the service information display window 12m. Thereby, various service information can be provided to viewers and a singer.

In this case, when an advertisement is displayed in the service information display window 12m, the service information display window 12m can be effectively used as an advertising medium.

Although service information is sent from the service information storage means 250 to the service information display window 12m in the above embodiment, the present invention is not limited to this and the service information may be provided from the transmission station 2.

### Embodiment 11

When an image of a singer 26, audience and other people is picked up by an ordinary pick-up device 24, an image of things present behind these people is also taken. To cancel this image, a chromakey technique is employed. This technique is to stretch a red or blue single-colored curtain behind the singer 26 and extract only an image of the singer 26 as a superimposed image 32 by filtering. In this case, an image behind the singer or the like and the square or heart-shaped outline of the superimposed image 32 are not displayed on the monitor and only an image of the singer or the like is extracted.

According to the present invention, there may be provided singing skill evaluation means for evaluating the singing skill of the singer. This means compares the singing of the singer with music in terms of interval, rhythm, etc. along with the music played and judges how much they agree with each other. There has been available an apparatus for evaluating singing skill in score by displaying the result of this evaluation as a score on a score display unit. In the present invention, based on the result of evaluation by this singing skill evaluation means, the enlargement/reduction control means 30a, the rotation control means 30d and the like may be controlled to control the movement of the superimposed image 32 to be displayed on the monitor. The singer can know the result of evaluation on his/her singing skill by viewing the movement of the superimposed image 32. In addition, this evaluation is carried out while music is played. For instance, when the superimposed image 32 is changed, for example, turned upside down or reduced where the singing skill of the singer is low, the singing skill of the singer can be evaluated according to the angle of rotation or the size of the superimposed image 32.

Another method for controlling the superimposed image 32 based on the result of evaluation by the singing skill evaluation means is to reduce the density of the superimposed image 32 of the singer or the like by controlling the mixer 40m when the singing skill of the singer is low and increase the density when the singing skill is high.

Still another method is to increase the movement speed of the superimposed image 32 of the singer by controlling the speed control means 30f when the singing kill of the singer is low and reduce the speed so that the image of the singer can be seen well when the singing skill is high.

## Claims

1. A karaoke system in which an image of a singer picked up by an image pick-up device is fitted into the screen of a monitor of the karaoke system and a lyrics pattern is displayed on the screen of the monitor such that it is not concealed by this superimposed image.

2. The karaoke system of claim 1, wherein the lyrics pattern is placed upon the superimposed image.

3. The karaoke system of claim 1, wherein the lyrics pattern is displayed at a position where the superimposed image is not displayed.

4. The karaoke system of claim 1, 2 or 3, wherein the superimposed image is enlarged or reduced while music is played.

5. The karaoke system of claim 1, 2 or 3, wherein the superimposed image is moved along a set line such as a straight line or curve while music is played.

6. The karaoke system of claim 1, 2 or 3, wherein several duplicates of the superimposed image are displayed on the screen of the monitor while music is played.

7. The karaoke system of claim 1, 2 or 3, wherein the superimposed image is rotated on the plane of the screen of the monitor or in a front or rear direction of the screen of the monitor while music is played.

8. The karaoke system of claim 1, 2 or 3, wherein the outline of the superimposed image can be changed.

9. The karaoke system of claim 1, 2 or 3, wherein the enlargement or reduction speed, movement speed, duplication or erasure speed, rotation speed and outline change speed of the superimposed image can be controlled.

10. The karaoke system of claim 1, 2 or 3, wherein the color of the superimposed image can be changed.

11. The karaoke system of claim 1, 2 or 3, wherein the brightness of the superimposed image can be changed.

12. The karaoke system of claim 1, 2 or 3, wherein the superimposed image is covered with a shutter and the shutter is gradually opened.

13. The karaoke system of claim 4, 5, 6, 7 or 8, wherein the controls of enlargement or reduction, movement, duplication, rotation and outline change of the superimposed image are selectively combined and performed simultaneously.

14. The karaoke system of claim 13, wherein the controls of enlargement or reduction, movement, duplication, rotation and outline change of the superimposed image are combined according to the contents of music played by the karaoke system.

15. The karaoke system of claim 13, wherein the controls of enlargement or reduction, movement, duplication, rotation and outline change of the superimposed image are carried out based on information transmitted from the outside.

16. A karaoke system in which an image of a singer picked up by an image pick-up device is fitted into the screen of a monitor of the karaoke system and a lyrics pattern is displayed on the screen of the monitor such that it is not concealed by this superimposed image,
wherein the density of the superimposed image is adjusted such that the lyrics pattern can be seen through the superimposed image.

17. A karaoke system in which an image of a singer picked up by an image pick-up device is fitted into the screen of a monitor of the karaoke system and a lyrics pattern is displayed on the screen of the monitor such that it is not concealed by this superimposed image,
wherein an area for displaying the lyrics pattern is detected in advance and the superimposed image is displayed on an area other than this area.

18. A karaoke system in which an image of a singer picked up by an image pick-up device is fitted into the screen of a monitor of the karaoke system and a lyrics pattern is displayed on the screen of the monitor such that it is not concealed by this superimposed image,
wherein an area for displaying the lyrics pattern is detected, the superimposed image is displayed on an area other than this area, and the area for displaying the lyrics pattern is determined by detecting a position which changes its color in accordance with music played.

19. A karaoke system in which an image of a singer picked up by an image pick-up device is fitted into the screen of a monitor of the karaoke system, a lyrics pattern is displayed on the screen of the monitor such that it is not concealed by this superimposed image, and the superimposed image is changed,
wherein the superimposed image is changed after the passage of a predetermined time from the start of music.

20. A karaoke system in which an image of a singer picked up by an image pick-up device is fitted into the screen of a monitor of the karaoke system and a lyrics pattern is displayed on the screen of the monitor such that it is not concealed by this superimposed image,
wherein the superimposed image is changed in accordance with the frequency of music data.

21. A karaoke system in which an image of a singer picked up by an image pick-up device is fitted into the screen of a monitor of the karaoke system and a lyrics pattern is displayed on the screen of the monitor such that it is not concealed by this superimposed image,
wherein the superimposed image is changed irregularly in accordance with the random number data of random number data output means.

22. A karaoke system in which an image of a singer picked up by an image pick-up device is fitted into the screen of a monitor of the karaoke system and a lyrics pattern is displayed on the screen of the monitor such that it is not concealed by this superimposed image,
wherein a service information display window is provided in the screen of the monitor and service information such as an advertisement stored in service information storage means is displayed in this service information display window.

23. A karaoke system in which an image of a singer picked up by an image pick-up device is fitted into the screen of a monitor of the karaoke system and a lyrics pattern is displayed on the screen of the monitor such that it is not concealed by this superimposed image,
wherein a service information display window is provided in the screen of the monitor and service information such as an advertisement transmitted from a transmission station for karaoke information is displayed in this service information display window.

24. A karaoke system in which an image of a singer picked up by an image pick-up device is fitted into the screen of a monitor of the karaoke system and a lyrics pattern is displayed on the screen of the monitor such that it is not concealed by this superimposed image,
wherein an image including the image of a singer fitted into the screen of the monitor is printed on a mount by a printer.

25. The karaoke system of claim 24, wherein the mount is divided into a plurality of areas by horizontal and vertical perforations and the image including the superimposed image of a singer or the like is printed on each of the areas. 26. A karaoke system in which an image of a singer picked up by an image pick-up device is fitted into the screen of a monitor of the karaoke system and a lyrics pattern is displayed on the screen of the monitor such that it is not concealed by this superimposed image,
wherein singing skill evaluation means is provided so that the superimposed image of the singer fitted into the screen of the monitor is controlled based on the output of this singing skill evaluation means.
